# EUROPEAN PATENT APPLICATION

(11) **EP 4 531 262 A1**
(43) Date of publication of application: **02.04.2025**
(21) Application number: 24202711.8
(22) Date of filing: 25.09.2024
(51) Int. Cl.: H02M 7/5387, H02M 1/12, H02M 1/44, H02M 1/00, H02M 7/00, H02S 40/32

(54) **INVERTER, RECTIFIER, FREQUENCY CONVERTER, AND PHOTOVOLTAIC POWER GENERATION SYSTEM**

(30) Priority: 27.09.2023 CN 202311277873; 02.08.2024 CN 202411057897
(71) Applicant: Huawei Digital Power Technologies Co., Ltd., Shenzhen, Guangdong 518043 (CN)
(72) Inventor: DING, Yaxue, Shenzhen, 518043 (CN); WANG, Jilang, Shenzhen, 518043 (CN); LI, Jia, Shenzhen, 518043 (CN); YAN, Weijia, Shenzhen, 518043 (CN)
(74) Representative: Gill Jennings & Every LLP

(57) **Abstract**

This application provides an inverter, a rectifier, a frequency converter, and a photovoltaic power generation system. The inverter includes a first power board, a second power board, and a first filter. The first power board is configured to fasten a first input end, a second input end, an inverter circuit, a first filter circuit, and an output end. The inverter circuit is configured to convert a direct current into an alternating current. The first filter includes an input end, a second filter circuit, a first output end, and a second output end. The input end of the first filter is connected to the output end of the first power board, and impedance of the first output end of the first filter is less than impedance of the second output end of the first filter. The second input end of the first power board is connected to the first output end of the first filter, and the first filter circuit is connected to the second input end of the first power board. An input end of the second power board is connected to the second output end of the first filter, and an output end of the second power board is configured to connect to an alternating current power grid or a load. Therefore, the inverter provided in this application can improve filtering effect and reduce costs.

## Description

### TECHNICAL FIELD

This application relates to the field of electric power technologies, and in particular, to an inverter, a rectifier, a frequency converter, and a photovoltaic power generation system.

### BACKGROUND

An inverter (INV) is an apparatus that converts a direct current (DC) into an alternating current (AC). For a high-power inverter, to improve power density of the entire inverter, a dual-layer architecture is usually used (one layer mainly performs power conversion, and the other layer mainly performs power output and sampling control). In an alternating current filter layout of a conventional inverter, a filter loop is usually long, which leads to poor filtering effect and high costs. Alternatively, to shorten the filter loop, a complex wiring manner is used, which is difficult to design and also causes high costs. Therefore, how to consider the filtering effect and costs for the high-power inverter is an urgent problem to be resolved currently.

### SUMMARY

This application provides an inverter, a rectifier, a frequency converter, and a photovoltaic power generation system, so that filtering effect can be improved and material costs can be reduced.

According to a first aspect, an inverter is provided, including a first power board, a second power board, an inverter circuit, a first filter circuit, a second filter circuit, and a third filter circuit. The first power board is configured to fasten the inverter circuit and the first filter circuit, and the first filter circuit is electrically connected to a direct current input end of the inverter circuit through the first power board. The second filter circuit includes one or more inverter inductors, and an output end of the inverter inductor is electrically connected to an input end of the first filter circuit through a first wire and the first power board sequentially. The second power board is configured to fasten the third filter circuit, the third filter circuit is electrically connected to the output end of the inverter inductor through the second power board and a second wire, and the third filter circuit is configured to electrically connect to a power grid or a load. The inverter circuit is configured to: convert a direct current into an alternating current and transmit the alternating current to the inverter inductor, and the inverter inductor is configured to: filter the alternating current, transmit a part of a filtered alternating current to the first filter circuit through the first wire, and transmit the other part of the filtered alternating current to the third filter circuit through the second wire. Impedance of an electrical connection line between the output end of the inverter inductor and an output end of the first filter circuit to a high-frequency ripple current is less than impedance of an electrical connection line between the output end of the inverter inductor and an output end of the third filter circuit to the high-frequency ripple current, and a frequency of the high-frequency ripple current is greater than that of a power frequency current. With the disposition, the high-frequency ripple current and the power frequency current can be automatically separated from the alternating current filtered by the inverter inductor. Therefore, quality of an output current of the inverter is ensured. In addition, the high-frequency ripple current directly flows to the first filter circuit through the first wire. Therefore, a filter loop of a high-frequency ripple current can be shortened, and electromagnetic compatibility of the inverter can be improved. Further, the power frequency current directly flows to the third filter circuit through the second wire. Therefore, a design of the first power board and wiring between the inverter inductor and the third filter circuit can be simplified, wiring space of the inverter can be reduced, and power density of the inverter can be improved.

In a possible implementation, a diameter of the first wire is less than a diameter of the second wire. The power frequency current is far greater than the high-frequency ripple current. Therefore, with the disposition, heat generated by the second wire can be reduced, and power conversion efficiency of the inverter can be improved.

In a possible implementation, the inverter inductor includes a coil, a magnetic core, and a package body. The coil is wound around the magnetic core, and the coil and the magnetic core are disposed in the package body.

In a possible implementation, the first filter circuit includes a capacitor.

In a possible implementation, the third filter circuit includes a differential mode inductor. The differential mode inductor is configured to filter a differential mode signal in the other part of the alternating current obtained through filtering by the inverter inductor.

In a possible implementation, the third filter circuit includes a common mode inductor. The common mode inductor is configured to filter a common mode signal in the other part of the alternating current obtained through filtering by the inverter inductor.

According to a second aspect, an inverter is provided, including a first power board, a second power board, an inverter circuit, a first filter circuit, a second filter circuit, and a third filter circuit. The first power board is configured to fasten the inverter circuit and the first filter circuit, and the first filter circuit is electrically connected to a direct current input end of the inverter circuit through the first power board. The second filter circuit includes one or more inverter inductors, and a first output end of the inverter inductor is electrically connected to an input end of the first filter circuit through a first wire. The second power board is configured to fasten the third filter circuit, the third filter circuit is electrically connected to a second output end of the inverter inductor through the second power board and a second wire sequentially, and the third filter circuit is configured to electrically connect to a power grid or a load. The inverter circuit is configured to: convert a direct current into an alternating current and transmit the alternating current to the inverter inductor, and the inverter inductor is configured to: filter the alternating current, transmit a part of a filtered alternating current to the first filter circuit through the first wire, and transmit the other part of the filtered alternating current to the third filter circuit through the second wire. Impedance of an electrical connection line between the first output end of the inverter inductor and an output end of the first filter circuit to a high-frequency ripple current is less than impedance of an electrical connection line between the second output end of the inverter inductor and an output end of the third filter circuit to the high-frequency ripple current, and a frequency of the high-frequency ripple current is greater than that a power frequency current. With the disposition, the high-frequency ripple current and a power frequency current can be automatically separated from the alternating current filtered by the inverter inductor. Therefore, quality of an output current of the inverter is ensured. In addition, the high-frequency ripple current directly flows to the first filter circuit through the first wire. Therefore, a filter loop of a high-frequency ripple can be shortened, and electromagnetic compatibility of the inverter can be improved. Further, the power frequency current directly flows to the third filter circuit through the second wire. Therefore, a design of the first power board and wiring between the inverter inductor and the third filter circuit can be simplified, wiring space of the inverter can be reduced, and power density of the inverter can be improved.

In another possible implementation of the second aspect, refer to the implementation of the first aspect. Details are not described again.

### BRIEF DESCRIPTION OF DRAWINGS

FIG. 1 is a schematic of a power generation system according to an embodiment of this application;
FIG. 2 is a schematic of an inverter according to an embodiment of this application;
FIG. 3 is a schematic of an inverter according to an embodiment of this application;
FIG. 4 is a schematic of an inverter according to an embodiment of this application;
FIG. 5 is a diagram of a current applicable to an embodiment of this application;
FIG. 6 is a diagram of an inductor applicable to an embodiment of this application;
FIG. 7 is a diagram of a structure of a first power board, a second power board, and a first filter according to an embodiment of this application;
FIG. 8 is a schematic of a power generation system according to an embodiment of this application; and
FIG. 9 is a schematic of a power generation system according to an embodiment of this application.

### Reference numerals:

100: inverter; 200: first power board; 300: second power board; 400: first filter; 210: inverter circuit; 220: first filter circuit; 21: first input end of a first power board; 22: second input end of a first power board; 23: output end of a first power board; 31: input end of a second power board; 32: output end of a second power board; 41: input end of a first filter; 42: first output end of a first filter; 43: second output end of a first filter; 410: second filter circuit; 411: inverter inductor; 4111: coil; 4112: magnetic core; 4113: package body.

### DESCRIPTION OF EMBODIMENTS

The following describes terms that may occur in embodiments of this application.

Dual-layer-architecture inverter: A power converter configured to convert a direct current into an alternating current. It mainly uses a dual-layer power board design, to respectively place a control circuit and a power circuit of the inverter on two different power boards. The control circuit is located on a second power board, and is responsible for controlling parameters such as a working status and an output voltage of the inverter. The control circuit generally includes a microprocessor or a digital signal processor, and is configured to: process an input signal, monitor the output voltage and an output current, perform calculation of a control algorithm. In addition, the control circuit further includes a protection circuit, which is configured to: monitor an operating status of the inverter, and take a protection measure in time when a fault or an exception occurs. The inverter circuit is located on a first power board. When the control circuit sends an instruction, the inverter circuit may control a switching status of a switch device according to the instruction, and convert electric energy of a direct current power supply into an alternating current.

An inverter inductor is a common element in an inverter circuit, and is configured to: perform filtering and stabilize an output voltage, and suppresses a change of a current through a self-inductance function of the inverter inductor, to reduce a fluctuation of the output voltage and harmonic content. When a switch device of the inverter is turned on or off, pulse currents at a switching frequency may be generated, and these pulse currents pass through the inverter inductor. Due to the self-inductance function, the inverter inductor may resist the change of the current, so that an output current changes more stably, and harmonic components of the current are reduced. In addition, the inverter inductor can also store energy. When the switch device is turned off, the inverter inductor may release the stored energy, to maintain continuity of the output current and therefore stabilize the output voltage. Besides, the inverter inductor may further suppress electromagnetic interference, reduce electromagnetic radiation, and the like.

A first filter circuit is a common circuit in an inverter, and is configured to: further smooth an output current and reduce a ripple of the current. A capacitor of the first filter circuit can store a charge, and provide electric energy between a positive half cycle and a negative half cycle of the current, to reduce the ripple of the current. A resistor of the first filter circuit mainly consumes a current, so that the output current is more stable.

A midpoint of an input end of an inverter circuit is a middle connection point between two polarities of an input power supply of an inverter. Generally, the input power supply of the inverter is a direct current power supply, and the midpoint is a connection point between a positive electrode and a negative electrode of the direct current power supply. The midpoint of the input end of the inverter circuit plays a role of balancing and stabilizing a current in the inverter; and also helps reduce a current impulse and voltage fluctuation, and improve stability and performance of the inverter. When the inverter is used in an alternating current power grid, the midpoint of the input end may also be connected to the ground (ground cable), to provide better electrical safety and electromagnetic compatibility.

The following describes technical solutions of this application with reference to the accompanying drawings.

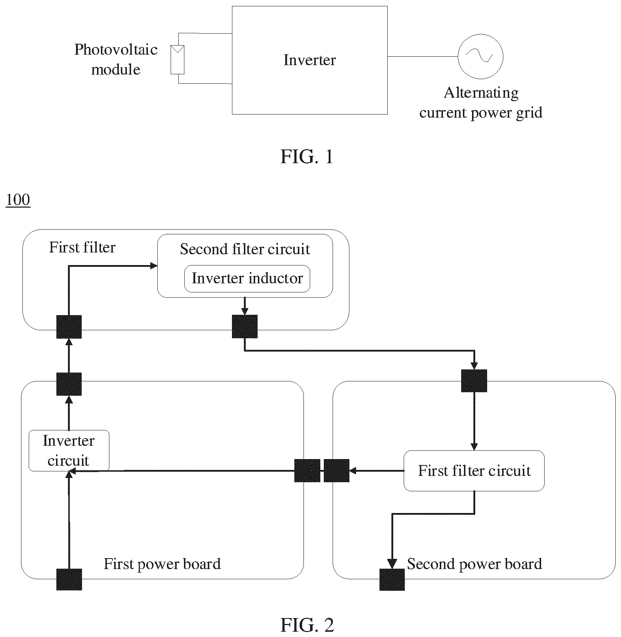

FIG. 1 is a schematic of a photovoltaic power generation system. The photovoltaic power generation system includes a photovoltaic module, an alternating current power grid, and an inverter. Output ports of M photovoltaic modules are connected to an input end of the inverter, and an output end of the inverter is connected to an input end of the alternating current power grid. The photovoltaic module is configured to generate a direct current. The inverter is configured to: perform inversion on the direct current and input an alternating current obtained through inversion to the alternating current power grid. The alternating current power grid is configured to provide an alternating current externally.

It should be noted that the photovoltaic module is a component that directly converts solar energy into electric energy through photovoltaic (photovoltaic) effect that occurs on a semiconductor material under a lighting condition. The photovoltaic module may also be referred to as a photovoltaic array, a solar panel, or the like.

The inverter in the photovoltaic power generation system is usually classified into a single-layer-architecture inverter and a dual-layer-architecture inverter. In a dual-layer-architecture inverter, there may be two wiring layouts of a first filter circuit. In a first wiring layout, the first filter circuit is fastened to a second power board. As shown in FIG. 2, an output end of a first power board is electrically connected to an input end of the first filter, and an output end of the first filter is directly electrically connected to an input end of the second power board. A direct current is input from a first input end of the first power board to an inverter circuit. The direct current is converted into an alternating current, and then the alternating current is output from the output end of the first power board to the input end of the first filter. The alternating current is input from the input end of the second power board to the first filter circuit. A ripple current is filtered through filtering of the first filter circuit, and then an alternating current is output. The alternating current is output from an output end of the second power board to an alternating current power grid or a load. In the wiring layout of the first filter circuit, a filtering path of the ripple current is long, which affects filtering effect. In addition, for electrical safety and electromagnetic compatibility of the circuit, an output end of the first filter circuit is electrically connected to a midpoint of an input end of the inverter circuit. A path between the output end of the first filter circuit and the midpoint of the input end of the inverter circuit is also long, which is not conducive to cost reduction.

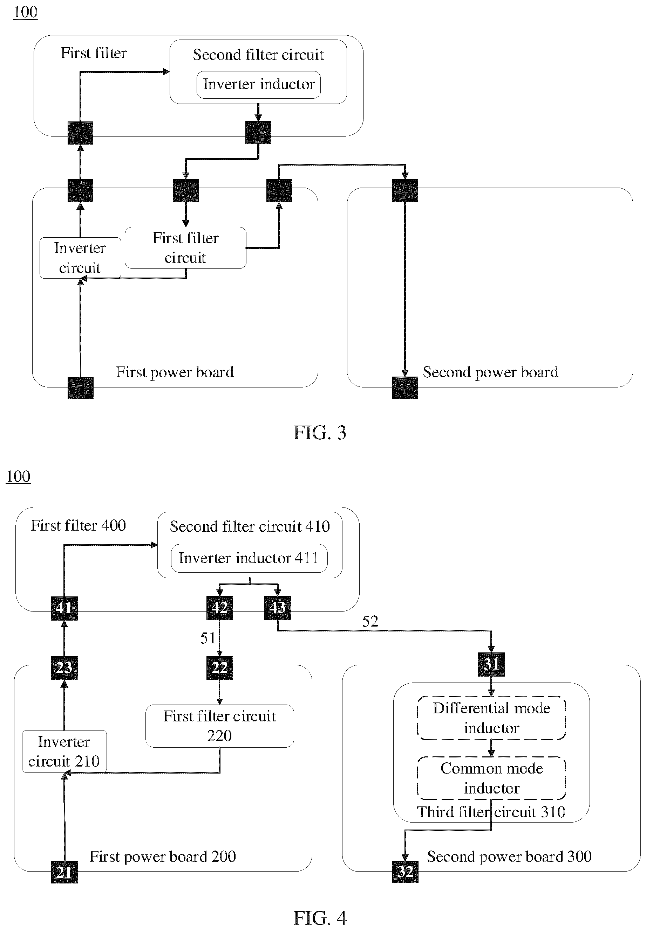

In a second wiring layout, the first filter circuit is fastened to a first power board. As shown in FIG. 3, alternating current obtained through processing by an inverter inductor is input from an output end of the filter to a second input end of the first power board. After a ripple current in the alternating current is filtered by a first filter circuit, specific wiring space is required on the first power board for a connection between an output end of the first power board and an input end of a second power board, so that the alternating current is output from the output end of the first power board to the input end of the second power board. In the wiring layout of the first filter circuit, the alternating current needs to be transferred and input from the first power board to the second power board. In this case, large wiring space is required on the first power board, and design difficulty and costs increase accordingly.

Therefore, embodiments of this application provide an inverter, so that a wiring layout of the first filter circuit can be more reasonable, filtering effect can be improved, and material costs can be reduced.

An embodiment of this application provides an inverter 100. FIG. 4 is a schematic of the inverter 100. The inverter 100 includes a first power board 200, a second power board 300, and a first filter 400. The first power board 200 and the second power board 300 may be placed in a stacked manner, and the second power board 300 is located above the first power board 200. Alternatively, the first power board 200 and the second power board 300 are placed on a same plane. The first filter 400 is placed independent of the first power board 200 and the second power board 300.

Specifically, the first power board 200 includes a first input end 21, a second input end 22, and an output end 23, and is configured to fasten an inverter circuit 210 and a first filter circuit 220. The first input end 21 of the first power board 200 is configured to input a direct current from a device such as a direct current system or a rectifier, the inverter circuit 210 is configured to convert the direct current into an alternating current, and the output end 23 of the first power board 200 is configured to output the alternating current. The first filter 400 includes an input end 41, a second filter circuit 410, a first output end 42, and a second output end 43. The first output end 42 and the second output end 43 are collectively referred to as output ends of an inverter inductor 411. The second filter circuit 410 may include one or more inverter inductors 411 connected in series. The following uses one inverter inductor 411 as an example for description.

The input end 41 of the first filter 400 is electrically connected to the output end 23 of the first power board 200. The alternating current is input from the input end 41 of the first filter 400 to the inverter inductor 411. The inverter inductor 411 is configured to perform filtering on the alternating current output by the inverter circuit 210. A part of an alternating current obtained through processing by the inverter inductor 411 is output from the first output end 42, and the other part of the alternating current obtained through processing by the inverter inductor 411 is output from the second output end 43.

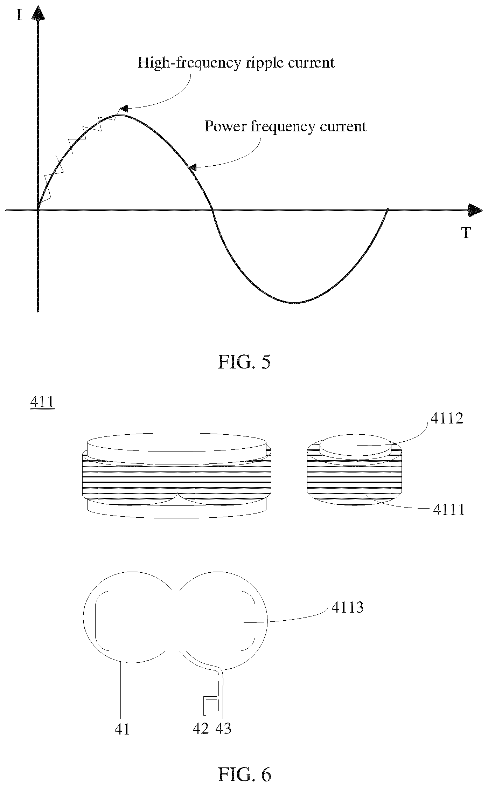

It should be noted that, as shown in FIG. 5, after being processed by the inverter inductor 411, on coordinate axes of time T and a current I, a high-frequency ripple current (Ripple Current) is superimposed on a power frequency current for output. The high-frequency ripple current is a current fluctuation or ripple caused by an alternating or periodically changing voltage source in a circuit, and is prone to cause an electronic element to periodically absorb and release energy. As a result, the element generates heat, energy consumption of the element is increased, a service life of the element may be shortened, and generated electromagnetic interference also affects performance of another electronic device or circuit. In some cases, the ripple current may cause an oscillation problem in the circuit and an unstable working condition, and affect performance and reliability of a system. A frequency of the high-frequency ripple current is greater than a frequency of the power frequency current.

To enable the inverter 100 to output a stable power frequency current, the high-frequency ripple current of the alternating current output by the inverter inductor 411 needs to be removed. For this, still refer to FIG. 4. The inverter inductor 411 is electrically connected to the first power board 200 through a first wire 51, so that the part of the alternating current obtained through filtering by the inverter inductor 411 is transmitted to the first power board 200 through the first wire 51, and the first power board 200 continues to transmit, through internal wiring, the part of the alternating current obtained through filtering by the inverter inductor 411 to the first filter circuit 220. Further, the inverter inductor 411 is electrically connected, through a second wire 52, to the second power board 300 that is configured to bear a third filter circuit 310, so that the other part of the alternating current obtained through filtering by the inverter inductor 411 is transmitted to the second power board 300 through the second wire 52, and the second power board 300 continues to transmit, through internal wiring, the other part of the alternating current obtained through filtering by the inverter inductor 411 to the third filter circuit 310. The third filter circuit 310 is configured to connect to a power grid or a load. Impedance of an electrical connection line between the output end of the inverter inductor 411 and an output end of the first filter circuit 220 to the high-frequency ripple current is less than impedance of an electrical connection line between the output end of the inverter inductor 411 and an output end of the third filter circuit 310 to the high-frequency ripple current.

Specifically, the high-frequency ripple current is output from the first output end 42 to the second input end 22 of the first power board 200, an input end of the first filter circuit 220 is electrically connected to the second input end 22 of the first power board, the output end of the first filter circuit 220 is connected to a midpoint of an input end of the inverter circuit 210, and the high-frequency ripple current is filtered by the first filter circuit 220. The second power board 300 includes an input end 31, the third filter circuit 310, and an output end 32. The third filter circuit 310 is connected in series between the input end 31 of the second power board 300 and the output end 32 of the second power board 300. After output from the second output end 43 of the first filter 400 to the input end 31 of the second power board 300, the alternating current is filtered by the third filter circuit 310 and then is output from the output end 32 of the second power board 300 to an alternating current power grid or the load.

With the disposition, the high-frequency ripple current and the power frequency current can be automatically separated from the alternating current filtered by the inverter inductor 411. Therefore, quality of the output current of the inverter 100 is ensured. In addition, the high-frequency ripple current directly flows to the first filter circuit 220 through the first wire 51. Therefore, a filter loop of a high-frequency ripple current can be shortened, and electromagnetic compatibility of the inverter 100 can be improved. Further, the power frequency current directly flows to the third filter circuit 310 through the second wire 52. Therefore, a design of the first power board 200 and wiring between the inverter inductor 411 and the third filter circuit 310 can be simplified, wiring space of the inverter 100 can be reduced, and power density of the inverter 100 can be improved.

It should be noted that, during actual application, the first output end 42 and the second output end 43 herein may be two independent terminals, or may be combined into one terminal. When the first output end 42 and the second output end 43 are two independent terminals, the first output end 42 is electrically connected to the first power board 200 through the first wire 51, the internal wiring of the first power board 200 further enables the first output end 42 to be electrically connected to the first filter circuit 220, the second output end 43 is electrically connected to the second power board 300 through the second wire 52, and the internal wiring of the second power board 300 further enables the second output end 43 to be electrically connected to the third filter circuit 310. When the first output end 42 and the second output end 43 are combined into one terminal, the first wire 51 and the second wire 52 are wrapped into one wire by an insulation sheath, and one end of the wire is connected to the terminal combined by the first output end 42 and the second output end 43. There is a gap in the insulation sheath of a middle part of the wire. The gap is configured to lead out the first wire 51 to enable the first wire 51 to be electrically connected to the first power board 200, so that the second wire 52 is connected to the second power board 300.

For an implementation in which the first output end 42 and the second output end 43 are two independent terminals, refer to FIG. 6. As shown in FIG. 6, the inverter inductor 411 includes a coil 4111, a magnetic core 4112, and a package body 4113. The coil 4111 is wound around the magnetic core 4112, and the coil 4111 and the magnetic core 4112 are disposed in the package body 4113. At the end of the coil 4111, it is divided into the two independent terminals, that is, the first output end 42 and the second output end 43. The first output end 42 is configured to electrically connect to the first power board 200 through the first wire 51, and the second output end 43 is configured to electrically connect to the second power board 300 through the second wire 52. It should be noted that, for ease of display, a shell of the first filter 400 is hidden in FIG. 6. During actual application, a shell configured to accommodate the inverter inductor 411 may be disposed, to ensure structural stability of the inverter inductor 411. The first filter 400 further includes a third wire (not shown), the inverter inductor 411 is connected to the input end 41 of the first filter 400 through the third wire, and the third wire may be led out by the coil 4111 of the inverter inductor 411, or the third wire is connected to the wire of the coil 4111.

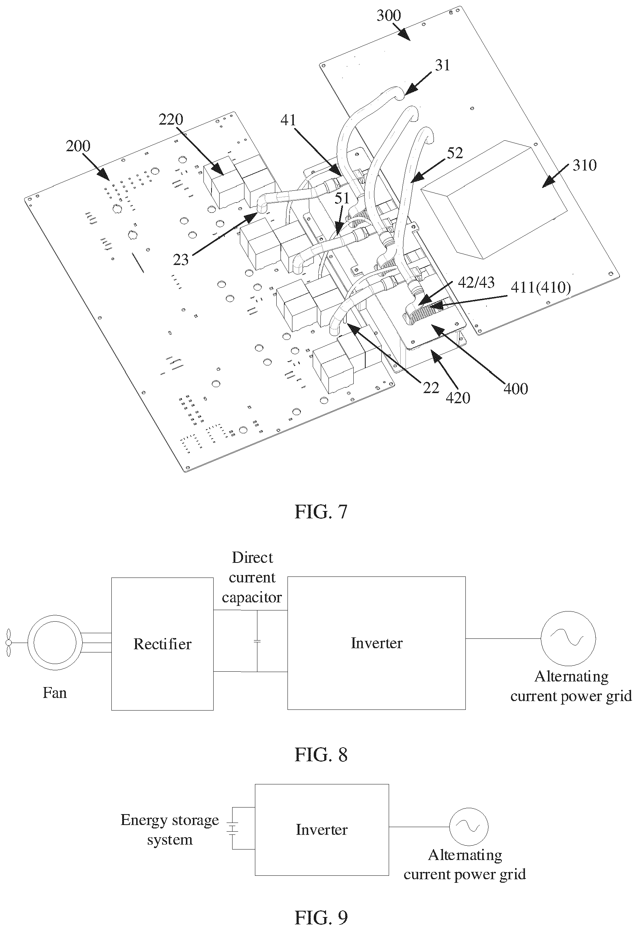

FIG. 7 is a diagram of a structure of the first power board 200, the second power board 300, and the first filter 400. In this embodiment, the first output end 42 and the second output end 43 are combined into one terminal, and the first wire 51 and the second wire 52 are wrapped into the wire by the insulation sheath. At the middle part of the wire, the first wire 51 extends out from the gap of the insulation sheath, so that the first wire 51 is electrically connected to the first power board 200. A diameter of the first wire 51 is less than a diameter of the second wire 52. As described above, the power frequency current is far greater than the high-frequency ripple current. Therefore, with the disposition, heat generated by the second wire 52 can be reduced, and power conversion efficiency of the inverter 100 can be improved.

Further, the first filter 400 includes a shell 420 and the second filter circuit 410, and the second filter circuit 410 includes three inverter inductors 411. It should be noted that, during actual application, a quantity of the inverter inductors 411 may be disposed as required, but is not limited to three.

Optionally, the first output end 42 and the second output end 43 may amplify and process selected output current by adding a switch circuit, such as a multiplexer or using an amplifier and another related circuit, to improve decoupling effect of the ripple current and the power frequency current. This is not specifically limited in embodiments of this application.

In the inverter provided in this embodiment of this application, the first filter 400 is connected to two output lines that have different impedance for the high-frequency ripple current, so that a flow direction of the ripple current in the alternating current is changed, and the high-frequency ripple current is decoupled from the alternating current at the first output end 42 and the second output end 43 of the first filter 400. Therefore, filtering effect is improved. In addition, a case in which the high-frequency ripple current is input to the second power board 300 with the alternating current and then is filtered is avoided, a filtering path of the ripple current is effectively shortened, and instability in the alternating current is reduced earlier. Besides, a transfer process in which the high-frequency ripple current is input to the first power board 200 with the alternating current, and then the alternating current obtained through filtering by the first filter circuit 220 is output from the first power board 200 to the second power board 300 is avoided, wiring space of the first power board 200 is reduced, and this also helps reduce costs.

In some embodiments, the inverter circuit 210 includes a drive control circuit, a direct current conversion circuit, a drive circuit, a protection detection circuit, a resonant capacitor, an output current sampling circuit, and the like. The drive control circuit may include an oscillator and a modulator. The drive circuit may include a power output transistor and a high-voltage transformer. This is not specifically limited in embodiments of this application.

In some embodiments, the first filter circuit 220 includes a capacitor, and the high-frequency ripple current is input to the capacitor of the first filter circuit 220 and is filtered by the capacitor. The first filter circuit 220 may further include a bipolar transistor, a unipolar transistor, an integrated operational amplifier, and the like.

In some embodiments, the third filter circuit 310 includes a differential mode inductor. The differential mode inductor is configured to filter a differential mode signal in the alternating current. An input end of the differential mode inductor is electrically connected to the input end 31 of the second power board 300, an output end of the differential mode inductor is electrically connected to the output end 32 of the second power board 300, the alternating current is input from the input end 31 of the second power board 300 to the differential mode inductor, to further filter the differential mode signal, and filtered alternating current is output to the output end 32 of the second power board 300. In some other embodiments, the third filter circuit 310 includes a common mode inductor. The common mode inductor is configured to filter a common mode signal in the alternating current. An input end of the common mode inductor is electrically connected to the input end 31 of the second power board 300, an output end of the common mode inductor is electrically connected to the input end of the differential mode inductor, and the output end of the differential mode inductor is electrically connected to the output end 32 of the second power board 300, to further filter the common mode signal and the differential mode signal in the alternating current. In this embodiment of this application, the differential mode inductor or the common mode inductor is disposed, to further improve stability of an alternating current.

In some embodiments, the inverter 100 further includes a first switch. An input end of the first switch is connected to an output end of the inverter circuit 210, an output end of the first switch is connected to the output end 23 of the first power board, and the first switch is configured to control the alternating current output by the inverter circuit 210 to be disconnected or connected. The first switch is disposed, so that signals or power supplies between different circuits can be effectively isolated, to prevent a problem of one circuit from affecting another circuit. This helps improve stability and security of an inverter circuit.

An embodiment of this application further provides a wind power generation system. As shown in FIG. 8, the inverter in embodiments of this application may be used in the wind power generation system. The wind power generation system includes a fan, a rectifier, and the inverter. The inverter is configured to: convert a direct current from the fan into an alternating current and transmit the alternating current to a power grid.

An embodiment of this application further provides an energy storage grid-connected power generation system. As shown in FIG. 9, the inverter in embodiments of this application may be used in the energy storage grid-connected power generation system. The energy storage grid-connected power generation system includes an energy storage system, an inverter, and an alternating current power grid. In the energy storage grid-connected power generation system, the inverter converts, into an alternating current, a direct current output by the energy storage system, and transmits the alternating current obtained through conversion to the alternating current power grid.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An inverter, comprising a first power board, a second power board, an inverter circuit, a first filter circuit, a second filter circuit, and a third filter circuit, wherein
the first power board is configured to fasten the inverter circuit and the first filter circuit, and the first filter circuit is electrically connected to a direct current input end of the inverter circuit through the first power board;
the second filter circuit comprises one or more inverter inductors, and an output end of the inverter inductor is electrically connected to an input end of the first filter circuit through a first wire and the first power board sequentially;
the second power board is configured to fasten the third filter circuit, the third filter circuit is electrically connected to the output end of the inverter inductor through the second power board and a second wire sequentially, and the third filter circuit is further configured to electrically connect to a power grid or a load;
the inverter circuit is configured to: convert a direct current into an alternating current and transmit the alternating current to the inverter inductor, and the inverter inductor is configured to: filter the alternating current, transmit a part of a filtered alternating current to the first filter circuit through the first wire, and transmit the other part of the filtered alternating current to the third filter circuit through the second wire; and
impedance of an electrical connection line between the output end of the inverter inductor and an output end of the first filter circuit to a high-frequency ripple current is less than impedance of an electrical connection line between the output end of the inverter inductor and an output end of the third filter circuit to the high-frequency ripple current, and a frequency of the high-frequency ripple current is greater than that of a power frequency current.

2. The inverter according to claim 1, wherein a diameter of the first wire is less than a diameter of the second wire.

3. The inverter according to claim 1, wherein the inverter inductor comprises a coil, a magnetic core, and a package body, the coil is wound around the magnetic core, and the coil and the magnetic core are disposed in the package body.

4. The inverter according to claim 1, wherein the first filter circuit comprises a capacitor.

5. The inverter according to any one of claims 1 to 4, wherein the third filter circuit comprises a differential mode inductor, and the differential mode inductor is configured to filter a differential mode signal in the other part of the alternating current obtained through filtering by the inverter inductor.

6. The inverter according to any one of claims 1 to 4, wherein the third filter circuit comprises a common mode inductor, and the common mode inductor is configured to filter a common mode signal in the other part of the alternating current obtained through filtering by the inverter inductor.

7. An inverter, comprising a first power board, a second power board, an inverter circuit, a first filter circuit, a second filter circuit, and a third filter circuit, wherein
the first power board is configured to fasten the inverter circuit and the first filter circuit, and the first filter circuit is electrically connected to a direct current input end of the inverter circuit through the first power board;
the second filter circuit comprises one or more inverter inductors, and a first output end of the inverter inductor is electrically connected to an input end of the first filter circuit through a first wire and the first power board sequentially;
the second power board is configured to fasten the third filter circuit, the third filter circuit is electrically connected to a second output end of the inverter inductor through the second power board and a second wire, and the third filter circuit is further configured to electrically connect to a power grid or a load;
the inverter circuit is configured to: convert a direct current into an alternating current and transmit the alternating current to the inverter inductor, and the inverter inductor is configured to: filter the alternating current, transmit a part of a filtered alternating current to the first filter circuit through the first wire, and transmit the other part of the filtered alternating current to the third filter circuit through the second wire; and
impedance of an electrical connection line between the first output end of the inverter inductor and an output end of the first filter circuit to a high-frequency ripple current is less than impedance of an electrical connection line between the second output end of the inverter inductor and an output end of the third filter circuit to the high-frequency ripple current, and a frequency of the high-frequency ripple current is greater than that of a power frequency current.

8. The inverter according to claim 7, wherein a diameter of the first wire is less than a diameter of the second wire.

9. The inverter according to claim 7, wherein the inverter inductor comprises a coil, a magnetic core, and a package body, the coil is wound around the magnetic core, and the coil and the magnetic core are disposed in the package body.

10. The inverter according to claim 7, wherein the first filter circuit comprises a capacitor.

11. The inverter according to any one of claims 7 to 10, wherein the third filter circuit comprises a differential mode inductor, and the differential mode inductor is configured to filter a differential mode signal in the other part of the alternating current obtained through filtering by the inverter inductor.

12. The inverter according to any one of claims 7 to 10, wherein the third filter circuit comprises a common mode inductor, and the common mode inductor is configured to filter a common mode signal in the other part of the alternating current obtained through filtering by the inverter inductor.
